# EUROPEAN PATENT APPLICATION

(11) **EP 2 405 338 A1**
(43) Date of publication of application: **11.01.2012**
(21) Application number: 11172723.6
(22) Date of filing: 05.07.2011
(51) Int. Cl.: G06F 3/048, G06F 1/16, G06F 17/30, G06Q 10/00

(54) **Method for presenting man machine interface and handheld device and computer-readable medium using the method**

(30) Priority: 06.07.2010 US 361532 P
(71) Applicant: HTC Corporation, Taoyuan County 330 (TW)
(72) Inventor: Chiang, Chi-Pang, 330 Taoyuan City, Taoyuan County (TW)
(74) Representative: 2K Patentanwälte Blasberg Kewitz & Reichel

(57) **Abstract**

A method for presenting man machine interface (MMI), a handheld device and a computer program product using the same method are proposed. The proposed method is adapted for the portable device, and includes following procedures. Firstly, a first column is displayed, where the first column includes a plurality of application categories having a common application attribute (S202). Then, a change of an orientation of the portable device is detected (S204). Moreover, it is changed from displaying of the first column to displaying of a plurality of second columns according to the change, where each one of the second columns includes at least one of the application categories (S206).

## Description

### BACKGROUND

### FIELD OF THE INVENTION

The invention relates to a method for presenting a man machine interface, a handheld device and a computer program product using the same method. Particularly, the invention relates to a method for presenting a man machine interface corresponding to an orientation of a handheld device, the handheld device and a computer-readable medium using the same method.

### DESCRIPTION OF RELATED ART

Currently, a handheld device, for example, a smart phone or a flat panel computer is generally equipped with a G-sensor to detect an orientation of the handheld device and adjust a screen display mode of the handheld device according to the current orientation.

However, regarding most of the handheld display devices, when the orientation thereof is varied (for example, the handheld device is changed from a portrait layout to a landscape layout), only the same or similar information is presented to a user, and the user cannot acquire further diversified information through different orientations of the handheld device. Moreover, when some contents displayed in the portrait layout is changed to be displayed in the landscape layout, since a single line of text in each page is prolonged and the number of list rows is decreased, such frame presentation is not convenient for the user to browse. Moreover, in order to acquire expected information, the user probably has to perform multiple switching operations or select a corresponding item from a menu, which can be inconvenient in operation.

Therefore, it is an important issue to present the user diversified information when the orientation of the handheld device is changed, so that the user can acquire expected information, and an added value of the handheld device is increased.

### SUMMARY

Accordingly, the invention is directed to a method for presenting a man machine interface (MMI), a handheld device and a computer-readable medium using the same method. When an orientation of the handheld device is changed from a portrait layout to a landscape layout, an integrated MMI mixed with data objects of different categories is switched to a categorized MMI, and in the categorized MMI, each column displays the data objects belonging to the same category. Moreover, in the categorized MMI, when gestures are used for left and right switching operations, different columns can be correspondingly switched, and when gestures are used for up and down switching operations, the same column can be scrolled up and down.

The invention provides a method for presenting a man machine interface (MMI). The method is adapted for a handheld device, and includes following steps. Firstly, a first column is displayed, where the first column includes a plurality of application categories having a common application attribute. Then, a change of an orientation of the handheld device is detected. Moreover, displaying of the first column is changed to displaying of a plurality of second columns according to the change, where each one of the second columns respectively includes at least one of the application categories.

In an embodiment of the invention, the method further includes: receiving a switching operation, and switching the second columns according to the switching operation.

In an embodiment of the invention, the method further includes: receiving a switching operation, where one of the application categories includes a plurality of data objects; and switching the data objects according to the switching operation.

In an embodiment of the invention, the change is that the handheld device is changed from a landscape layout to a portrait layout, and the method further includes changing from displaying of the second columns to displaying of the first column according to the change.

In an embodiment of the invention, the chang is that the handheld device is changed from the portrait layout to the landscape layout, and the method further includes changing from displaying of the first column to displaying of the second columns according to the change.

In an embodiment of the invention, the method further includes providing a plurality of corresponding function options in each one of the second columns, and when one of the function options is selected, processing the data objects in the second column corresponding to the selected function option according to the selected function option.

In an embodiment of the invention, the common application attribute is an email, each one of the application categories corresponds to an email service provider, each one of the second columns includes at least an email application program, each one of the data objects is an email object, and the method further includes: respectively categorizing email objects to one of the email application programs according to the email service providers; and displaying a plurality of email objects of a single email service provider in an email list of each one of the second columns.

In an embodiment of the invention, the common application attribute is a community website, each one of the application categories corresponds to a community website provider, each one of the second columns includes at least a webpage browser frame, and each one of the data objects is a community website object, and the method further includes: respectively categorizing community website objects to one of the webpage browser frames according to the community website providers; and displaying a plurality of community website objects of a single community website provider in a community website object list of each one of the second columns.

In an embodiment of the invention, the common application attribute is a video website, each one of the application categories corresponds to a video website provider, each one of the second columns includes at least a webpage browser frame, and each one of the data objects is a video object, and the method further includes: respectively categorizing video objects to one of the webpage browser frames according to the video website providers; and displaying a plurality of video objects of a single video website provider in a video object list of each one of the second columns.

In an embodiment of the invention, the common application attribute is a webpage record category, each one of the application categories corresponds to a webpage record category, each one of the second columns includes at least a webpage browser frame, and each one of the data objects is a webpage record, and the method further includes: respectively categorizing webpage records to one of the webpage browser frames according to the webpage record categories; and displaying a plurality of webpage records of a same webpage record category in a webpage record list of each one of the second columns.

In an embodiment of the invention, the webpage record categories include a most viewed webpage category, a webpage bookmark category and a browsing history category.

The invention provides a handheld device including a display unit, a detecting unit and a control unit. The display unit is configured to display a first column, where the first column includes a plurality of application categories having a common application attribute. The detecting unit is configured to detect a change of an orientation of the handheld device. Moreover, the control unit is connected to the display unit and the detecting unit and configured for controlling the display unit to change from displaying of the first column to displaying of a plurality of second columns according to the change, where each one of the second columns respectively includes at least one of the application categories.

An example of the invention provides a computer-readable medium, which includes computer executable program, and when the computer executable program is loaded to a communication device, the communication device executes following operations. Firstly, a first column is displayed, where the first column includes a plurality of application categories having a common application attribute. Then, a change of an orientation of the handheld device is detected. Moreover, displaying of the first column is changed to displaying of a plurality of second columns according to the change, where each one of the second columns respectively includes at least one of the application categories.

According to the above descriptions, the invention provides a method for presenting a man machine interface (MMI), a handheld device and a computer-readable medium using the same method. When the handheld device is in one orientation, it presents an integrated MMI mixed with data objects of different categories in the first column. When the handheld device is changed from the aforementioned orientation to another orientation, the first column is switched to display a plurality of second columns of the categorized MMI. Moreover, the data objects belonging to the same application category are displayed in each one of the second columns. In addition, when left and right switching operations are performed through gestures, the second columns can be correspondingly switched, and when up and down switching operations are performed through gestures, a data object list in a specific second column can be scrolled up and down. In this way, operation convenience of the MMI is improved, and operation experience of the user is increased such that the added value of the handheld device can be increased as well.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a functional block diagram of a handheld device according to an embodiment of the invention.

FIG. 2 is a flowchart illustrating a method for presenting a man machine interface (MMI) according to a first embodiment of the invention.

FIG. 3A is a schematic diagram of a categorized MMI according to a first embodiment of the invention.

FIG. 3B is a flowchart illustrating a method for presenting an MMI according to the first embodiment of the invention.

FIG. 4A is a schematic diagram of a categorized MMI according to a second embodiment of the invention.

FIG. 4B is a flowchart illustrating a method for presenting an MMI according to the second embodiment of the invention.

FIG. 5A is a schematic diagram of a categorized MMI according to a third embodiment of the invention.

FIG. 5B is a flowchart illustrating a method for presenting an MMI according to the third embodiment of the invention.

FIG. 6A is a schematic diagram of a categorized MMI according to a fourth embodiment of the invention.

FIG. 6B is a flowchart illustrating a method for presenting an MMI according to the fourth embodiment of the invention.

### DETAILED DESCRIPTION OF DISCLOSED EMBODIMENTS

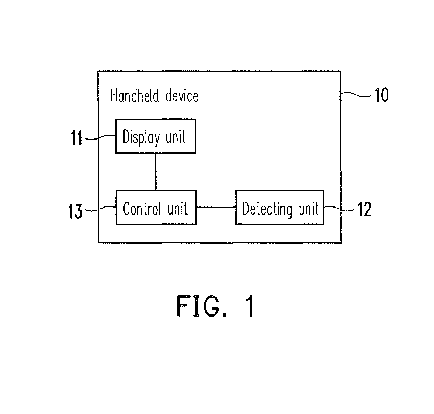

FIG. 1 is a functional block diagram of a handheld device 10 according to an embodiment of the invention. The handheld device 10 is adapted to switch between an integrated man machine interface (MMI) and a categorized MMI when an orientation of the handheld device 10 is changed.

The change of the orientation refers to a change from a portrait layout to a landscape layout, or a change from the landscape layout to the portrait layout.

The integrated MMI is also a global view MMI, and just a first column is displayed in the integrated MMI, where the first column includes a plurality of data objects of different application categories having a common application attribute. For example, the first column can list data objects of different application categories in a display frame of the portrait layout.

On the contrary, the categorized MMI displays a plurality of second columns, and the data objects can be categorized according to an application category parameter, and the data objects belonging to different application categories can be presented by the second columns in a display frame of the landscape layout. Moreover, each one of the second columns includes at least one of the application categories. Namely, each one of the second columns in the categorized MMI presents the data objects belonging to a same application category, so as to facilitate a user browsing the data objects and shorten time required for searching the data objects.

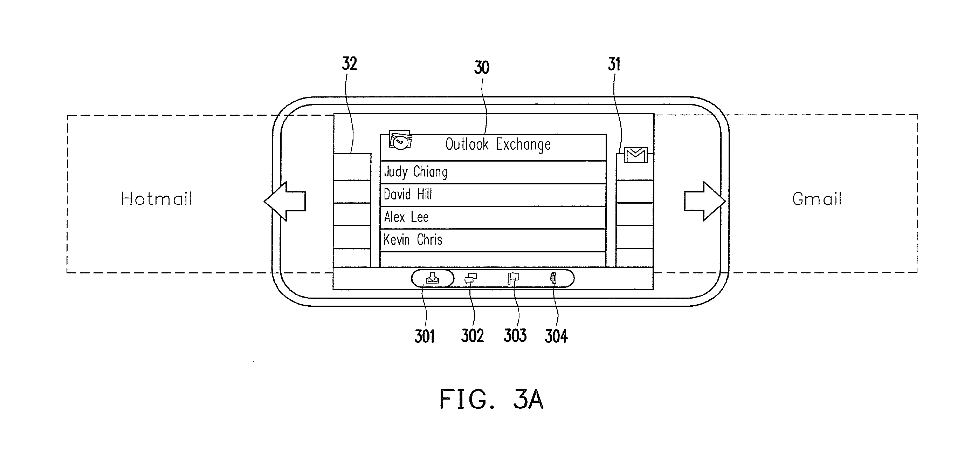

Moreover, referring to FIG. 3A, FIG. 4A and FIG. 5A, in the categorized MMI, a width of the second column located at the center is suitably reduced to effectively reduce a text length therein, and empty regions external to both sides of the second column can be flexibly used to present a part of contents of two adjacent second columns, so as to notify the user to perform a left switching operation or a right switching operation, thereby switching to the other suitably categorized second columns.

The handheld device 10 at least includes a display unit 11, a detecting unit 12 and a control unit 13. The display unit 11 is, for example, a display, which is configured for displaying the MMI, and the MMI includes the integrated MMI and the categorized MMI. To be illustrated more clearly, the display unit 11 displays the first column or a plurality of the second columns, where the first column includes a plurality of application categories having a common application attribute.

Moreover, the detecting unit 12 may include a G-sensor, which is used for detecting a change of the orientation of the handheld device 10. The change refers to that the handheld device 10 is changed from a portrait layout to a landscape layout, or changed from the landscape layout to the portrait layout. The detecting unit 12 further includes a touch screen detector (not shown) configured for receiving a switching operation from the user, for example, selecting of an item displayed on the MMI, a left switching operation, a right switching operation, an up switching operation or a down switching operation.

The control unit 13 is connected to the display unit 11 and the detecting unit 12, and controls the display unit 11 to switch between the integrated MMI and the categorized MMI according to the change. The control unit 13 can include a processing unit (not shown), an operating system (not shown) and a related display firmware (software program) for driving or control the display unit 11 to present an MMI frame. Moreover, the control unit 13 can control the display unit 11 to switch between the second columns according to the switching operation received by the detecting unit 12. In addition, the control unit 13 can also control the display unit 11 to switch between the data objects corresponding to one of the application categories according to the switching operation received by the detecting unit 12.

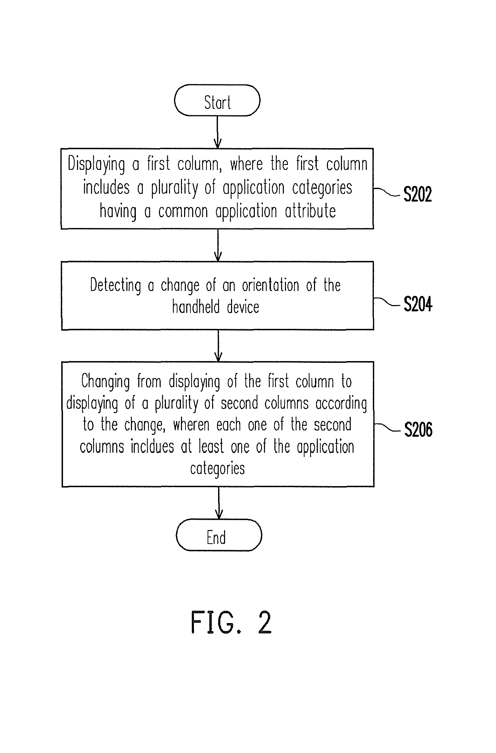

Technical features of the operation method of the control unit 13 will be described below in accordance with FIG. 2. FIG. 2 is a flowchart illustrating a method for presenting a man machine interface according to a first embodiment of the invention. The method starts from a step S202, and in the step S202, the display unit 11 displays a first column, where the first column includes a plurality of application categories having a common application attribute.

In step S204, the detecting unit 12 detects a change of an orientation of the handheld device 10.

In step S206, the control unit 13 controls the display unit 11 to change from displaying of the first column to displaying of a plurality of second columns according to the change, where each one of the second columns includes at least one of the application categories.

The control unit 13 can categorize the data objects to a plurality of the second columns in the categorized MMI according to the application categories, where each one of the second columns has a data object list displaying a plurality of the data objects corresponding to a same application category.

Moreover, the control unit 13 can control the display unit 11 to switch between the second columns according to the switching operation detected by the detecting unit 12. For example, when the detecting unit 12 detects that the user performs the left switching operation or the right switching operation in the categorized MMI by gestures, the control unit 13 controls the display unit 11 to switch between the second columns in the categorized MMI according to the switching operation.

When one of the application categories includes a plurality of the data objects, the control unit 13 can also control the display unit 11 to switch between the data objects in a second column according to the switching operation detected by the detecting unit 12. For example, when the detecting unit 12 detects that the user performs the up switching operation or the down switching operation in the second column of the categorized MMI by gestures, the control unit 13 controls the display unit 11 to up-scroll or down-scroll on a data object list of the second column. Alternately, when the detecting unit 12 detects that the user performs the up switching operation or the down switching operation in the second column by gestures, the control unit 13 correspondingly controls the display unit 11 to switch between the data objects in the second column.

When the change refers to that the handheld device 10 is changed from the landscape layout to the portrait layout, the control unit 13 can control the display unit 11 to change from displaying of the second columns to displaying of the first column according to the change. Namely, when the detecting unit 12 detects that the handheld device 10 is changed from the landscape layout to the portrait layout, the control unit 13 can control the display unit 11 to change from displaying of the second columns of the categorized MMI to displaying of the first column of the integrated MMI according to the change.

When the change refers to that the handheld device 10 is changed from the portrait layout to the landscape layout, the control unit 13 controls the display unit 11 to change from displaying of the first column to displaying of the second columns according to the change. Namely, when the detecting unit 12 detects that the handheld device 10 is changed from the portrait layout to the landscape layout, the control unit 13 can control the display unit 11 to change from displaying of the first column of the integrated MMI to displaying of the second columns of the categorized MMI according to the change.

The control unit 13 can also control the display unit 11 to provide a plurality of function options in each one of the second columns, and when one of the function options is selected, the control unit 13 processes the data objects in the second column corresponding to the selected function option according to the selected function option. To be illustrated more clearly, the control unit 13 can control the display unit 11 to provide a plurality of function options just suitable for the corresponding second column in each one of the second columns of the categorized MMI, and when one of the function options is selected by the user, the control unit 13 processes the one or a plurality of the data objects in the corresponding second column corresponding to the selected function option according to the selected function option.

In order to describe the technical features of the above steps S202 to S206 in detail, four exemplary embodiments are provided below in accordance with corresponding figures for descriptions.

FIG. 3A is a schematic diagram of a categorized MMI according to a first embodiment of the invention. In the first embodiment, the common application attribute is an email, each one of the application categories corresponds to an email service provider, each one of the second columns includes at least an email application program, and each one of the data objects is an email object. The second columns of FIG. 3A correspond to the frame displayed in the step S206. In the first embodiment, the frame corresponding to the step 202 (not shown) originally displays the first column, which displays a plurality of email objects coming from a plurality of email service providers.

The categorized MMI of FIG. 3A includes a plurality of second columns respectively displaying frames of the email application programs. The control unit 13 respectively categorizes email objects to one of the email application programs according to the email service providers, and each communication protocol module For example, in FIG. 3A, a second column 30 located at the center of the display unit 11 displays an email application program, which has an email list to display a plurality of the email objects coming from a single email service provider (for example, the Outlook Express email service provider, the Hotmail email service provider or the Gmail email service provider). Moreover, four function options 301, 302, 303 and 304 are displayed in the second column 30, and the function options 301, 302, 303 and 304 are just configured for processing the email objects displayed by the email application program in the second column 30. The function options 301, 302, 303 and 304 are, for example, inbox, outbox, high priority degree and attachments.

When one of the function operations 301, 302, 303 and 304 is selected by the user, the control unit 13 processes one or a plurality of the data objects in the second column 30 (and the corresponding email application program) according to the selected function option. When the detecting unit 12 detects that the user performs the up switching operation or the down switching operation in the second column 30 of the categorized MMI by gestures, the control unit 13 controls the display unit 11 to up-scroll or down-scroll a data object list of the second column 30 according to the switching operation, so as to switch the email objects.

Moreover, a left part and a right part of the frame displayed on the display unit 11 respectively display parts of two adjacent second columns 31 and 32, which respectively present a corresponding email application program and a part of the corresponding email list to display a part of the email objects coming from two other email service providers (for example, the Hotmail email service provider and the Gmail email service provider). In this way, the user can be notified to perform a left switching operation or a right switching operation in the categorized MMI, so as to switch to the adjacent second column (or the corresponding email application program).

For example, when the detecting unit 12 detects that the user performs the left switching operation or the right switching operation in the categorized MMI by gestures, the control unit 13 controls the display unit 11 to switch from the second column 30 to the second column 31 or the second column 32 in the categorized MMI according to the switching operation. Since different second columns display different email application programs, and the email objects displayed in different second columns correspond to different email service providers, based on the categorized MMI shown in FIG. 3A, switching times of the second columns and time required for searching the emails can be greatly reduced.

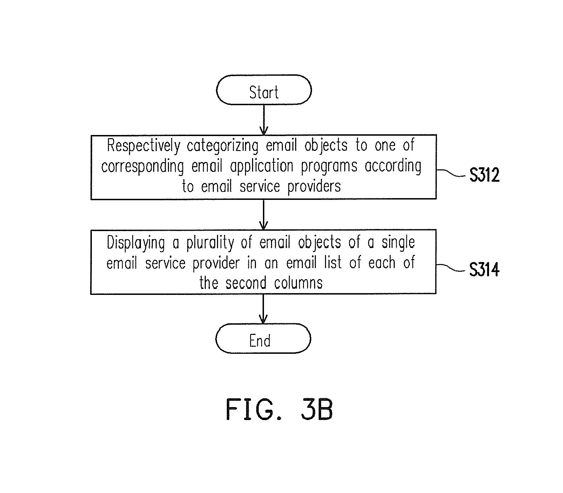

FIG. 3B is a flowchart illustrating a method for presenting an MMI according to the first embodiment of the invention. The flowchart of FIG. 3B corresponds to the schematic diagram of FIG. 3A, by which the technical features of the step S206 will be described in detail. The application categories in the step S206 correspond to a plurality of the email service providers of the present embodiment, the second columns are multiple email application programs, and the data objects are multiple email objects.

Referring to FIG. 1 to FIG. 3B, in step S312, in the categorized MMI, the control unit 13 respectively categorizes email objects to one of the email application programs according to the email service providers. In step S314, the control unit 13 controls the display unit 11 to display an email list of each one of the second columns, so as to display a plurality of email objects of a single email service provider.

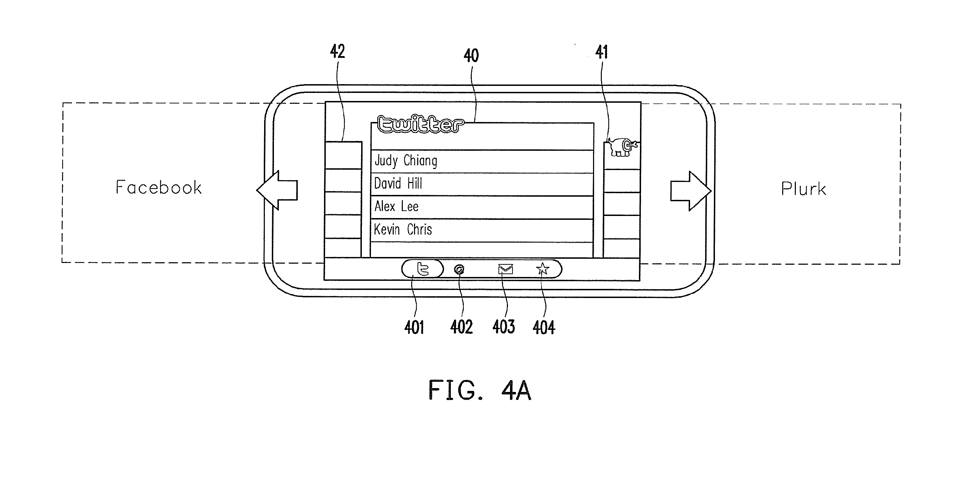

FIG. 4A is a schematic diagram of a categorized MMI according to a second embodiment of the invention. In the second embodiment, the common application attribute is a community website, each one of the application categories corresponds to a community website provider, each one of the second columns includes at least a webpage browser frame, and each one of the data objects is a community website object. The second columns of FIG. 4A correspond to the frame displayed in the step S206. In the second embodiment, the frame corresponding to the step 202 (not shown) just displays the first column, which displays a plurality of community website objects from a plurality of community website providers.

The categorized MMI of FIG. 4A includes a plurality of frames in which the second columns respectively display the webpage browser frames. The control unit 13 respectively categorizes community website objects to one of the webpage browser frames according to the community website providers, and each one of the second columns has a community website object list to display a plurality of the community website objects coming from a single community website provider.

The categorized MMI of FIG. 4A includes a plurality of second columns respectively displaying a plurality of webpage frames of a plurality of community websites. For example, according to the conventional technique, when the handheld device 10 is in the portrait layout mode, the handheld device 10 can mix the community website objects (for example, data objects or multimedia objects published or attached on the community website by users of a same community group) of a plurality of community websites (for example, the Facebook community website provider, the Twitter community website provider and the Plurk community website provider) in a list (i.e., the integrated MMI) to provide the user a function of quick browsing. However, when the handheld device 10 is changed from the portrait layout to the landscape layout, no suitable adjustment or modification is performed according to the conventional technique, but just the integrated MMI is presented in the landscape layout frame. Therefore, operation convenience of the user in browsing the community website is decreased.

Therefore, the invention provides another method for presenting the MMI according to the operating object of the user. Referring to FIG. 4A, a second column 40 located at the center of the display unit 11 displays a community website page, which has a community website object list to display a plurality of the community website objects coming from a single community website provider (for example, the Twitter community website provider). Moreover, four function options 401, 402, 403 and 404 are displayed in the second column 40, and when one of the function operations 401, 402, 403 and 404 is selected by the user, the control unit 13 processes a plurality of the community website objects corresponding to the selected function option in the second column 40 according to the selected function option. The function options 401, 402, 403 and 404, for example, correspond to functions of sending a twitter message, sending an email, priority level and special mark. When one of the function operations 401, 402, 403 and 404 is selected by the user, the control unit 13 processes one or a plurality of the community website objects in the second column 40 according to the selected function option.

Moreover, when the detecting unit 12 detects that the user performs the up switching operation or the down switching operation in the second column 40 of the categorized MMI by gestures, the control unit 13 controls the display unit 11 to up-scroll or down-scroll the community website object list of the second column 40 according to the switching operation, so as to switch the community website objects in the second column 40.

Moreover, a left part and a right part of the frame displayed on the display unit 11 respectively display two adjacent second columns 41 and 42, which respectively present a corresponding community website page and a part of the corresponding community website object list to display a plurality of the community website objects coming from two other community website providers (for example, the Facebook community website provider and the Plurk community website provider). When the detecting unit 12 detects that the user performs the left switching operation or the right switching operation in the categorized MMI by gestures, the control unit 13 controls the display unit 11 to switch from the second column 40 to the second column 41 or the second column 42 in the categorized MMI. Since the community website objects displayed in different second columns correspond to different community website providers, based on the categorized MMI shown in FIG. 4A, switching times of the second columns and time required for searching the community website objects can be greatly reduced.

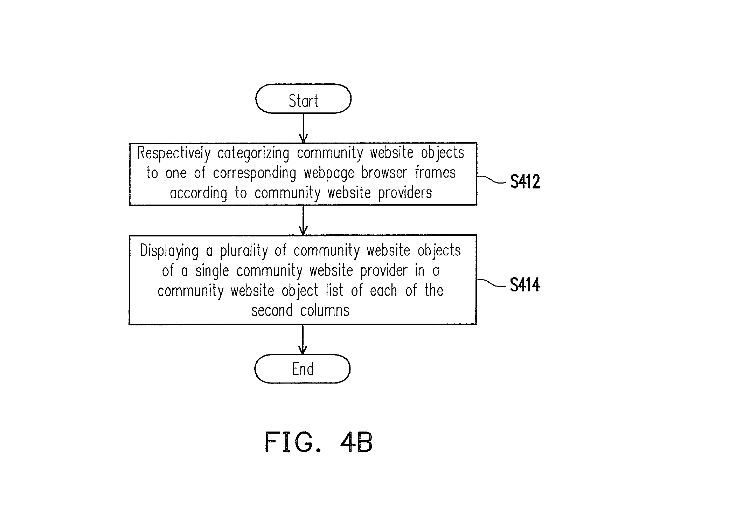

FIG. 4B is a flowchart illustrating a method for presenting an MMI according to the second embodiment of the invention. The flowchart of FIG. 4B corresponds to the schematic diagram of FIG. 4A, by which the technical features of the step S206 will be described in detail. The application categories in the step S206 correspond to a plurality of the community website providers of the present embodiment, the second columns are multiple website browser frames, and the data objects are multiple community website objects. Referring to FIG. 1, FIG. 2, FIG. 4A and FIG. 4B, in step S412, in the categorized MMI, the control unit 13 respectively categorizes community website objects to one of the website browser frames according to the community website providers. In step S414, the control unit 13 controls the display unit 11 to display a community website object list of each one of the second columns, so as to display a plurality of the community website objects of a single community website provider.

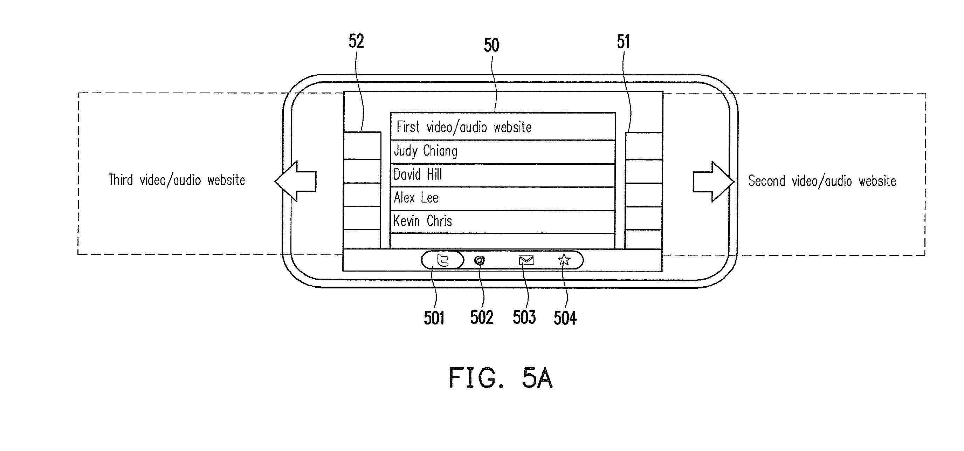

FIG. 5A is a schematic diagram of a categorized MMI according to a third embodiment of the invention. In the third embodiment, the common application attribute is a video/audio website, each one of the application categories corresponds to a video/audio website provider, each one of the second columns includes at least one webpage browser frame, and each one of the data objects is a video/audio object. The second columns of FIG. 5A correspond to the frame displayed in the step S206. In the third embodiment, the frame corresponding to the step 202 (not shown) just displays the first column, which displays a plurality of video/audio objects from a plurality of video/audio website providers.

The categorized MMI of FIG. 5A includes a plurality of frames in which the second columns respectively display the webpage browser frames. The control unit 13 respectively categorizes video/audio objects to one of the webpage browser frames according to the video/audio website providers, and each one of the second columns has a video/audio object list to display a plurality of the video/audio objects coming from a single video/audio website provider.

The categorized MMI of FIG. 5A includes a plurality of second columns respectively displaying a plurality of video/audio webpage frames of a plurality of video/audio websites. For example, according to the conventional technique, when the handheld device 10 is in the portrait layout mode, the handheld device 10 can mix the video/audio objects (for example, latest updated video/audio objects) of a plurality of video/audio websites (for example, the YouTube video/audio website provider, the pps Internet TV video/audio website provider and the Tudou video/audio website provider) in a video/audio object list (i.e., the integrated MMI) to provide the user a function of quick browsing. However, when the handheld device 10 is changed from the portrait layout to the landscape layout, no suitable adjustment or modification is performed according to the existing technique, but just the integrated MMI is presented in the landscape layout frame. Therefore, operation convenience of the user in browsing the video/audio website is decreased.

Therefore, the invention provides another method for presenting the MMI according to the operating object of the user. Referring to FIG. 5A, a second column 50 located at the center of the display unit 11 displays a webpage frame of a first video/audio website, which has a video/audio object list to display a plurality of the video/audio objects come from a single video/audio website provider. Moreover, four function options 501, 502, 503 and 504 are displayed in the second column 50, and when one of the function operations 501, 502, 503 and 504 is selected by the user, the control unit 13 just processes a plurality of the video/audio objects corresponding to the selected function option in the second column 50 according to the selected function option. The function options 501, 502, 503 and 504, for example, correspond to most viewed video, most discussed video, most updated video and most rated video.

When one of the function operations 501, 502, 503 and 504 is selected by the user, the control unit 13 processes one or a plurality of the video/audio objects in the second column 50 according to the selected function option. Moreover, when the detecting unit 12 detects that the user performs the up switching operation or the down switching operation in the second column 50 of the categorized MMI by gestures, the control unit 13 controls the display unit 11 to up-scroll or down-scroll the video/audio object list of the second column 50 according to the switching operation, so as to switch the video/audio objects in the second column 50.

Moreover, a left part and a right part of the frame displayed on the display unit 11 respectively display parts of two adjacent second columns 51 and 52, which respectively present a corresponding video/audio website page and a part of the corresponding video/audio object list to display a plurality of the video/audio objects coming from two other video/audio website providers (for example, the YouTube video/audio website provider and the Tudou video/audio website provider). When the detecting unit 12 detects that the user performs the left switching operation or the right switching operation in the categorized MMI by gestures, the control unit 13 controls the display unit 11 to switch from the second column 50 to the second column 51 or the second column 52 in the categorized MMI according to the switching operation. Since the video/audio objects displayed in different second columns correspond to different video/audio website providers, based on the categorized MMI shown in FIG. 5A, switching times of the second columns and time required for searching the video/audio objects can be greatly reduced.

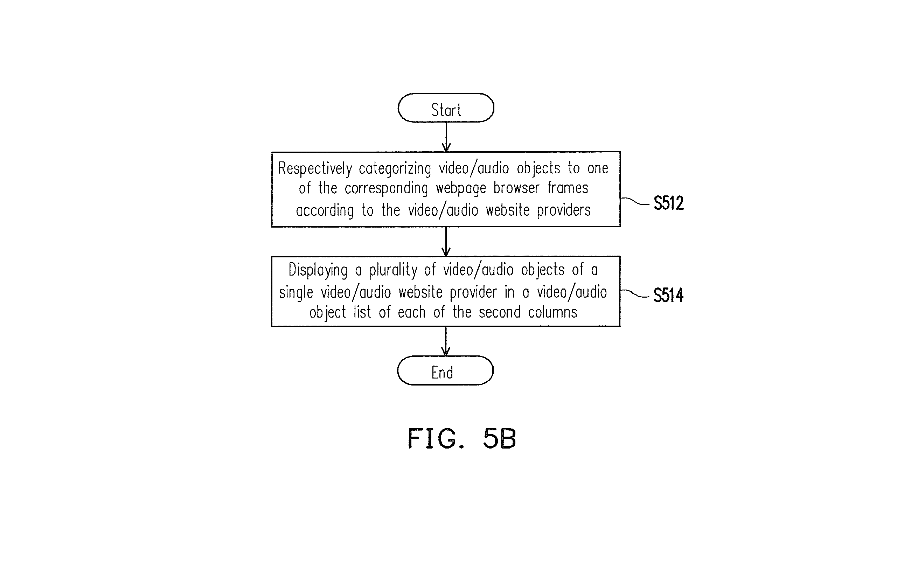

FIG. 5B is a flowchart illustrating a method for presenting an MMI according to the third embodiment of the invention. The flowchart of FIG. 5B corresponds to the schematic diagram of FIG. 5A, by which the technical features of the step S206 will be described in detail. The application categories in the step S206 correspond to a plurality of the video/audio website providers of the present embodiment, the second columns are multiple website browser frames, and the data objects are multiple video/audio objects. Referring to FIG. 1, FIG. 2, FIG. 5A and FIG. 5B, in step S512, in the categorized MMI, the control unit 13 respectively categorizes video/audio objects to one of the website browser frames according to the video/audio website providers. In step S514, the control unit 13 controls the display unit 11 to display a video/audio object list of each one of the second columns, so as to display a plurality of the video/audio objects of a single video/audio website provider.

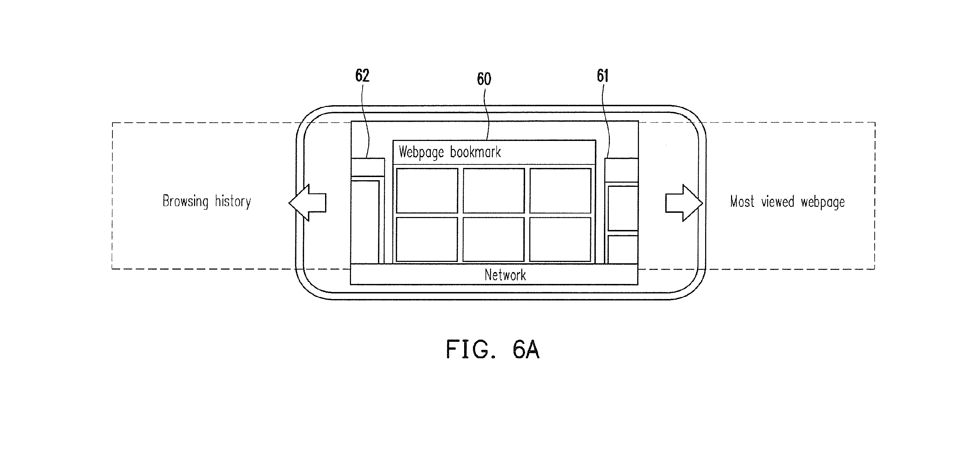

FIG. 6A is a schematic diagram of a categorized MMI according to a fourth embodiment of the invention. In the fourth embodiment, the common application attribute is a webpage record category, each one of the application categories corresponds to a webpage record category, each one of the second columns includes at least a webpage browser frame, and each one of the data objects is a webpage record.

The second columns of FIG. 6A correspond to the frame displayed in the step S206. In the fourth embodiment, the frame corresponding to the step 202 (not shown) just displays the first column, which displays a plurality of webpage records belonging to a plurality of webpage record categories.

The categorized MMI of FIG. 6A includes a plurality of frames in which the second columns respectively display a plurality of the webpage browser frames. The control unit 13 respectively categorizes webpage records to one of the webpage browser frames according to the webpage record categories, and each one of the second columns has a data object list to display a plurality of the webpage records belonging to a single webpage record category.

The categorized MMI of FIG. 6A includes a plurality of second columns respectively displaying a plurality of webpage record frames of a plurality of webpage record categories. For example, according to the conventional technique, when the handheld device 10 is in the portrait layout mode, the handheld device 10 can mix the webpage records respectively belonging to a plurality of webpage record categories (for example, a most viewed category, a bookmark category and a browsing history category) in a list (i.e., the integrated MMI) to provide the user a function of quick browsing. However, when the handheld device 10 is in the landscape layout mode, no suitable adjustment or modification is performed according to the conventional technique, but just the integrated MMI is presented in the landscape layout frame. In this case, when the user wants to browse webpages of the most viewed category, the bookmark category and the browsing history category, the user has to operate several times of menu selections for selecting the corresponding function.

Therefore, the invention provides another method for presenting the MMI according to the operating object of the user. Referring to FIG. 6A, a second column 60 located at the center of the display unit 11 presents a webpage record list, which displays a plurality of the webpage records complied with the corresponding webpage record category. When the detecting unit 12 detects that the user performs the up switching operation or the down switching operation in the second column 60 of the categorized MMI by gestures, the control unit 13 correspondingly controls the display unit 11 to up-scroll or down-scroll the webpage record list of the second column 60.

Moreover, a left part and a right part of the frame displayed on the display unit 11 respectively display two adjacent second columns 61 and 62, which respectively present a corresponding webpage record category and a corresponding webpage record list to display a plurality of the webpage records belonging to different webpage record categories (for example, the most viewed category and the browsing history category). When the detecting unit 12 detects that the user performs the left switching operation or the right switching operation in the categorized MMI by gestures, the control unit 13 controls the display unit 11 to switch from the second column 60 to the second column 61 or the second column 62 in the categorized MMI according to the switching operation. Since the webpage records displayed in different second columns correspond to different webpage record categories, based on the categorized MMI shown in FIG. 6A, switching times of the second columns and time required for searching the webpage records can be greatly reduced.

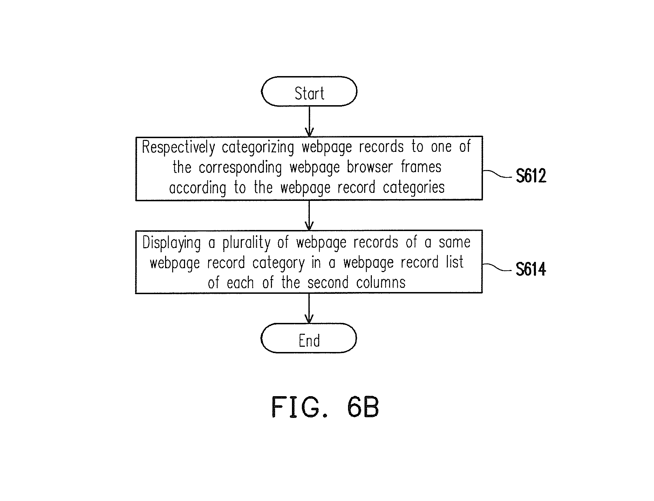

FIG. 6B is a flowchart illustrating a method for presenting an MMI according to the fourth embodiment of the invention. The flowchart of FIG. 6B corresponds to the schematic diagram of FIG. 6A, by which the technical features of the step S206 will be described in detail. The application categories in the step S206 correspond to a plurality of the webpage record categories of the present embodiment, the second columns respectively present one of the webpage record categories, and the data objects are multiple webpage records. Referring to FIG. 1, FIG. 2, FIG. 6A and FIG. 6B, in step S612, in the categorized MMI, the control unit 13 respectively categorizes webpage records to one of the website browser frames according to the webpage record categories. In step S614, the control unit 13 controls the display unit 11 to display a webpage record list of each of the second columns, so as to display a plurality of the webpage records belonging to the same webpage record category.

The invention is not limited to the aforementioned embodiments, and in other embodiments, the main concept of the method for presenting the MMI can also be applied to contact data objects. Implantation of the contact data objects is described in detail below. When the handheld device 10 is in the portrait layout, the first column displayed by the integrated MMI includes contact data objects mixed with application categories of different contact groups. When the handheld device 10 is changed from the portrait layout to the landscape layout, the control unit 13 switches the integrated MMI to the categorized MMI, and categorizes the contact data objects into different contact groups respectively. Each one of the second columns of the categorized MMI corresponds to an application category of a different contact group, and each one of the second columns displays the contact data objects in the contact group in a list.

When the detecting unit 12 detects that the user performs the up switching operation or the down switching operation in the second column 60 of the categorized MMI by gestures, the control unit 13 correspondingly controls the display unit 11 to up-scroll or down-scroll a contact list of the second column 60 according to the switching operation. When the detecting unit 12 detects that the user performs the left switching operation or the right switching operation in the categorized MMI by gestures, the control unit 13 controls the display unit 11 to switch from a current second column (corresponding to one contact group) to another adjacent second column (corresponding to another contact group) in the categorized MMI according to the switching operation.

The invention further provides a computer-readable medium storing a computer executable program, which can be loaded into a handheld device to execute various steps of a method of controlling the adjacent devices. The computer-readable medium is composed of a plurality of program instructions (for example, an organization chart establishing program instruction, a table approving program instruction, a setting program instruction, and a deployment program instruction, etc), and these program instructions are loaded into the handheld device and executed by the same to accomplish various steps of the method for presenting the MMI and various functions of the handheld device.

In summary, the invention provides methods for presenting a man machine interface (MMI), a handheld device and a computer program product using the same methods. When the handheld device is in one orientation, it presents an integrated MMI mixed with data objects of different categories in the first column. When the handheld device is changed from the aforementioned orientation to another orientation, the first column is switched to a plurality of second columns. Moreover, the data objects are categorized into the second columns according to the application categories, and the data objects corresponding to the same application category are displayed in each one of the second columns. In addition, when a left switching operation or a right switching operation is performed in the second columns by gesture, one second column can be correspondingly switched to another second column, and when an up switching operation or a down switching operation is performed in the first column or the second column by gesture, the data objects in the corresponding column can be switched. In this way, operation convenience of the MMI is improved, and operation experience of the user is increased.

It will be apparent to those skilled in the art that various modifications and variations can be made to the structure of the invention without departing from the scope or spirit of the invention. In view of the foregoing, it is intended that the invention cover modifications and variations of this invention provided they fall within the scope of the following claims and their equivalents.

## Claims

1. A method for presenting a man machine interface, adapted for a handheld device, and comprising:
displaying a first column, wherein the first column comprises a plurality of application categories having a common application attribute;
detecting a change of an orientation of the handheld device; and
changing from displaying of the first column to displaying of a plurality of second columns according to the change, wherein each one of the second columns comprises at least one of the application categories.

2. The method for presenting the man machine interface as claimed in claim 1, further comprising receiving a switching operation, and switching the second columns according to the switching operation.

3. The method for presenting the man machine interface as claimed in claim 1 or 2, further comprising:
receiving a switching operation, wherein one of the application categories comprises a plurality of data objects; and
switching the data objects according to the switching operation.

4. The method for presenting the man machine interface as claimed in one of the preceding claims, wherein the change is that the handheld device is changed from a landscape layout to a portrait layout, and the method further comprises:
changing from displaying of the second columns to displaying of the first column according to the change.

5. The method for presenting the man machine interface as claimed in claim 4, wherein the change is that the handheld device is changed from the portrait layout to the landscape layout, and the method further comprises:
changing from displaying of the first column to displaying of the second columns according to the variation.

6. The method for presenting the man machine interface as claimed in claim 4 or 5, further comprising:
providing a plurality of function options in each of the second columns; and
when one of the function options is selected, processing the data objects in the second column corresponding to the selected function option according to the selected function option.

7. The method for presenting the man machine interface as claimed in one of claims 4 to 6, wherein the common application attribute is an email, each one of the application categories corresponds to an email service provider, each one of the second columns comprises at least an email application program, each one of the data objects is an email object, and the method further comprises:
respectively categorizing email objects to one of the email application programs according to the email service providers; and
displaying a plurality of email objects of a single email service provider in an email list of each one of the second columns.

8. The method for presenting the man machine interface as claimed in one of claims 4 to 6, wherein the common application attribute is a community website, each one of the application categories corresponds to a community website provider, each one of the second columns comprises at least a webpage browser frame, each one of the data objects is a community website object, and the method further comprises:
respectively categorizing community website objects to one of the webpage browser frames according to the community website providers; and
displaying a plurality of community website objects of a single community website provider in a community website object list of each one of the second columns.

9. The method for presenting the man machine interface as claimed in one of claims 4 to 6, wherein the common application attribute is a video website, each one of the application categories corresponds to a video website provider, each one of the second columns comprises at least a webpage browser frame, each one of the data objects is a video object, and the method further comprises:
respectively categorizing video objects to one of the webpage browser frames according to the video website providers; and
displaying a plurality of video objects of a single video website provider in a video object list of each one of the second columns.

10. The method for presenting the man machine interface as claimed in one of claims 4 to 6, wherein the common application attribute is a webpage record category, each one of the application categories corresponds to a webpage record category, each one of the second columns comprises at least a webpage browser frame, each one of the data objects is a webpage record, and the method further comprising:
respectively categorizing webpage records to one of the webpage browser frames according to the webpage record categories; and
displaying a plurality of webpage records of a same webpage record category in a webpage record list of each one of the second columns.

11. The method for presenting the man machine interface as claimed in claim 10, wherein the webpage record categories comprise a most viewed webpage category, a webpage bookmark category and a browsing history category.

12. A handheld device (10), comprising:
a display unit (11), configured for displaying a first column, wherein the first column comprises a plurality of application categories having a common application attribute;
a detecting unit (12), configured for detecting a change of an orientation of the handheld device; and
a control unit (13), connected to the display unit and the detecting unit, configured for controlling the display unit to change from displaying of the first column to displaying of a plurality of second columns according to the change, wherein each one of the second columns comprises at least one of the application categories.

13. The handheld device (10) as claimed in claim 12,
wherein the display unit (11) receives a switching operation, and the control unit (13) switches the second columns according to the switching operation.

14. The handheld device (10) as claimed in claim 12,
wherein the display unit (11) receives a switching operation, one of the application categories comprises a plurality of data objects, and the control unit switches the data objects according to the switching operation.

15. The handheld device (10) as claimed in claim 12, wherein the change is that the handheld device is changed from a landscape layout to a portrait layout, and the control unit (13) controls the display unit to change from displaying of the second columns to displaying of the first column according to the change.

16. The handheld device (10) as claimed in claim 12, wherein the change is that the handheld device is changed from the portrait layout to the landscape layout, and the control unit (13) controls the display unit to change from displaying of the first column to displaying of the second columns according to the change.

17. The handheld device (10) as claimed in claim 14, wherein the control unit (13) provides a plurality of function options in each one of the second columns, and when one of the function options is selected, the control unit processes the data objects in the second column corresponding to the selected function option according to the selected function option.

18. The handheld device (10) as claimed in claim 15, wherein:
the common application attribute is an email, each one of the application categories corresponds to an email service provider, each one of the second columns comprises at least an email application program, and each one of the data objects is an email object; and
the control unit (13) respectively categorizes email objects to one of the email application programs according to the email service providers, and each one of the second columns has an email list for displaying a plurality of email objects of a single email service provider.

19. The handheld device (10) as claimed in claim 15, wherein:
the common application attribute is a community website, each one of the application categories corresponds to a community website provider, each one of the second columns comprises at least a webpage browser frame, and each one of the data objects is a community website object; and
the control unit (13) respectively categorizes community website objects to one of the webpage browser frames according to the community website providers, and each one of the second columns has a community website object list for displaying a plurality of community website objects of a single community website provider.

20. The handheld device as claimed in claim 15, wherein:
the common application attribute is a video website, each one of the application categories corresponds to a video website provider, each one of the second columns comprises at least a webpage browser frame, and each one of the data objects is a video object; and
the control unit (13) respectively categorizes video objects to one of the webpage browser frames according to the video website providers, and each one of the second columns has a video object list for displaying a plurality of video objects of a single video website provider.

21. The handheld device (10) as claimed in claim 15, wherein:
the common application attribute is a webpage record category, each one of the application categories corresponds to a webpage record category, each one of the second columns comprises at least a webpage browser frame, and each one of the data objects is a webpage record; and
the control unit (13) respectively categorizes webpage records to one of the webpage browser frames according to the webpage record categories, and each one of the second columns has a webpage record list for displaying a plurality of webpage records of a single webpage record category.

22. The handheld device (10) as claimed in claim 21, wherein the webpage record categories comprise a most viewed webpage category, a webpage bookmark category and a browsing history category.

23. A computer-readable medium, storing a computer executable program, wherein when the computer executable program is loaded into a handheld device (10), the handheld device executes the following steps:
displaying a first column, wherein the first column comprises a plurality of application categories having a common application attribute;
detecting a variation of an orientation of the handheld device; and
changing from displaying of the first column to displaying of a plurality of second columns according to the variation, wherein each one of the second columns comprises at least one of the application categories.
